# EUROPEAN PATENT APPLICATION

(11) **EP 2 843 579 A1**
(43) Date of publication of application: **04.03.2015**
(21) Application number: 13790040.3
(22) Date of filing: 24.04.2013
(51) Int. Cl.: G06F 21/10

(54) **APPARATUS AND METHOD FOR SETTING RIGHTS FOR EACH OBJECT OF PIECE OF CONTENT**

(30) Priority: 24.04.2012 KR 20120042439
(71) Applicant: Fasoo. Com Co., Ltd, Seoul 121-270 (KR)
(72) Inventor: LEE, Hyoung-Joo, Seoul 122-760 (KR)
(74) Representative: Grünecker, Kinkeldey, Stockmair & Schwanhäusser
(86) International application number: PCT/KR2013/003522
(87) International publication number: WO 2013/172562

(57) **Abstract**

Disclosed are an apparatus and method for setting rights for each object of a piece of content. A data detection unit detects, for each object, data regions corresponding to each of a plurality of objects in the source code of a piece of digital content including the plurality of objects. A data encryption unit encrypts the data region from among the plurality of data regions that corresponds to the object subject to protection. A data transmission unit transmits the source code of the piece of digital content including the encrypted data region to a user terminal. According to the present invention, use rights can be authorized for each object included in a piece of content, and therefore a user may be provided with the selected object according to the right of the user for the same content. Further, a file may be executed even on a computer in which a DRM program is not installed, and it is possible to set the file such that a user may not access only the encrypted object in the file being executed.

## Description

### [Technical Field]

The present invention relates to an apparatus and method for setting rights for each object of content, and more particularly, to an apparatus and method for setting rights for each object of content, which can control access by a user to digital content.

### [Background Art]

Digital Rights Management (DRM) is an access control technology that is a kind of information protection technologies that are used by copyright holders or publishers with the intent to control the illegal or unauthorized use of digital media. DRM is a new concept that was introduced along with the wide use of digital content over the Internet.

Unlike analog content, digital content may be easily and quickly copied and distributed using computers, and also copied content has almost the same quality as original content. In addition, most users still think that content over the Internet is free of charge, resulting in illegal copy and abnormal distribution of content. Illegal copy and distribution of digital content that requires significant cost, effort, and time to produce may cause benefits of digital content creators to be invaded and discourage their creative wills, thereby hindering development of digital content industries.

In digital content, a document has vulnerable security and thus is encrypted and then decrypted by only users who have rights to access the documents. In general, the DRM, which uses such encryption and decryption, encrypts an entire file in units of files. That is, a file is wholly encrypted irrespectively of the types of the objects, such as, a video, a text, an image, and so on, that are included in the file. Users may decrypt the file corresponding to the users' rights to, for example, read, print, modify, and copy the file.

For example, user A may be assigned rights to read, print, modify, and copy an encrypted document while user B may be assigned rights to read and copy the document. In this case, user A can read, print, modify, and copy the whole encrypted document, and user B can read and copy the whole encrypted document.

However, such encryption of documents in units of files allows users to be authorized or not authorized for all objects because consideration of importance of the objects in the file is not allowed and also authorization for each object is not allowed. That is, when the entire file is encrypted, even uncopyrighted objects in the file cannot be used.

Korean Patent Publication No. 2009-0016282 discloses a digital rights management (DRM) system and method for partial encryption of content. According to the disclosed method, when specific content is encrypted, a portion, not the whole, of the content may be selectively encrypted, thus reducing time taken to decrypt large-scale content.

However, it is not possible to consider importance of objects in the content and also to perform authorization for each object. Furthermore, when an encrypted portion of the content cannot be decrypted, it is also impossible to use the whole content.

### [Disclosure]

### [Technical Problem]

The invention is directed to providing an apparatus and method for setting a user's rights for each of objects included in digital content, and setting rights for each object of content such that a part other than the encrypted object of the digital content may be available without any limitation, and an apparatus and method for providing content based on the rights for each object.

### [Technical Solution]

One aspect of the present invention provides an apparatus for setting rights for each object of content according to the present invention, the apparatus including: a date detection unit configured to detect, for each of a plurality of objects, data regions corresponding to each of the plurality of objects from a source code of digital content including the plurality of objects; a data encryption unit configured to encrypt a data region corresponding to a protection target object among the data regions; and a data transmission unit configured to transmit the source code of the digital content including the encrypted data region to a user terminal.

Another aspect of the present invention provides a method of setting rights for each object of content according to the present invention, the method including: a date detection step of detecting, for each of a plurality of objects, data regions corresponding to each of the plurality of objects from a source code of digital content including the plurality of objects; a data encryption step of encrypting a data region corresponding to a protection target object among the data regions; and a data transmission step of transmitting the source code of the digital content including the encrypted data region to a user terminal.

### [Advantageous Effects]

According to the apparatus and method for setting rights for each object of content and the apparatus and method for providing content based on the rights for each object, since rights for each of objects included in the content are given, a user may receive an object selected from the same content according to the user's rights. Furthermore, a file may be executed even in a computer not having a DRM program installed therein, and only an encrypted object in the executed file may not be accessed.

### [Description of Drawings]

FIG.1 is a view showing an entire right management system including an apparatus for setting rights for each object of content and an apparatus for providing content based on the rights for each object according to the present invention.
FIG. 2 is a block diagram showing a configuration of a preferred embodiment of an apparatus for setting rights for each object of content according to the present invention.
FIG. 3 is a view showing an embodiment of digital content and an object constituting the digital content.
FIG. 4 is a view illustrating an embodiment in which access disallowance information is output by a user terminal.
FIG. 5 is a view illustrating an embodiment in which a protection target object is output by a user terminal.
FIG. 6 is a view showing an embodiment in which a configuration of digital content is changed by a data encryption unit.
FIG. 7 is a block diagram showing a configuration of a preferred embodiment of an apparatus for providing content based on rights for each object according to the present invention.
FIG. 8 is a flowchart showing a process of performing a preferred embodiment for a method of setting rights for each object of content according to the present invention.
FIG. 9 is a flowchart showing a process of performing a preferred embodiment for a method of providing content based on rights for each object according to the present invention.

### [Modes of the Invention]

Hereinafter, an apparatus and method for setting rights for each object of content according to the present invention and an apparatus and method for providing content based on the rights for each object will be described in detail with reference to the accompanying drawings.

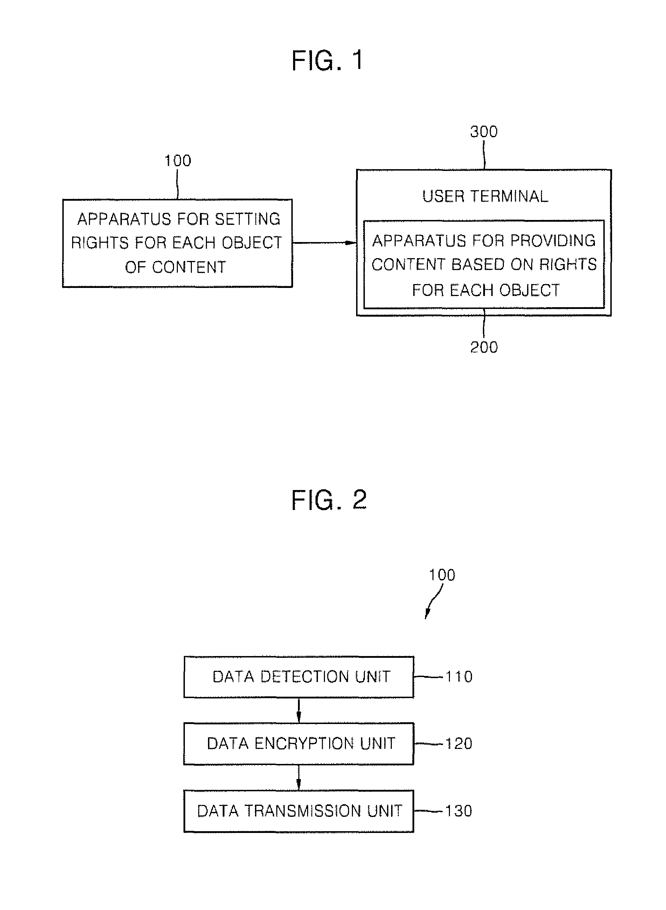

FIG.1 is a view showing an entire right management system including an apparatus for setting rights for each object of content and an apparatus for providing content based on the rights for each object according to an embodiment of the present invention.

Referring to FIG. 1, the right management system includes an apparatus 100 for setting rights for each object of content, an apparatus 200 for providing content based on rights for each object, and a user terminal 300.

The apparatus 100 for setting rights for each object of content according to the present invention may be located at a server of a digital content provider and configured to encrypt a portion corresponding to a protection target object in a source code of digital content including a plurality of objects and transmit the encrypted portion to the user terminal 300.

In addition, the apparatus 200 for providing content based on rights for each object according to the present invention may perform an operation for decrypting the encrypted portion in the source code of the digital content that is transmitted to the user terminal 300 and may be implemented in the form of a digital rights management (DRM) program. The apparatus 200 for providing content based on rights for each object according to the present invention may be provided in the user terminal as shown in FIG. 1 or implemented as a separate apparatus to transmit and receive data to and from the user terminal 300.

Hereinafter, operations of the apparatus 100 for setting rights for each object of content and the apparatus 200 for providing content based on rights for each object will be described in detail.

FIG. 2 is a block diagram showing a configuration of a preferred embodiment for the apparatus 100 for setting rights for each object of content according to the present invention.

Referring to FIG. 2, the apparatus 100 for setting rights for each object of content according to the present invention includes a data detection unit 110, a data encryption unit 120, and a data transmission unit 130.

The data detection unit 110 detects, for each of a plurality of objects, a data region corresponding to each of the plurality of objects from the source code of the digital content including the plurality of objects.

The digital content may be output through the user terminal 300 in various forms such as a web page, a document, and the like to provide information to a user, and include various forms of objects such as a text, a video, an image, a sound source, etc.

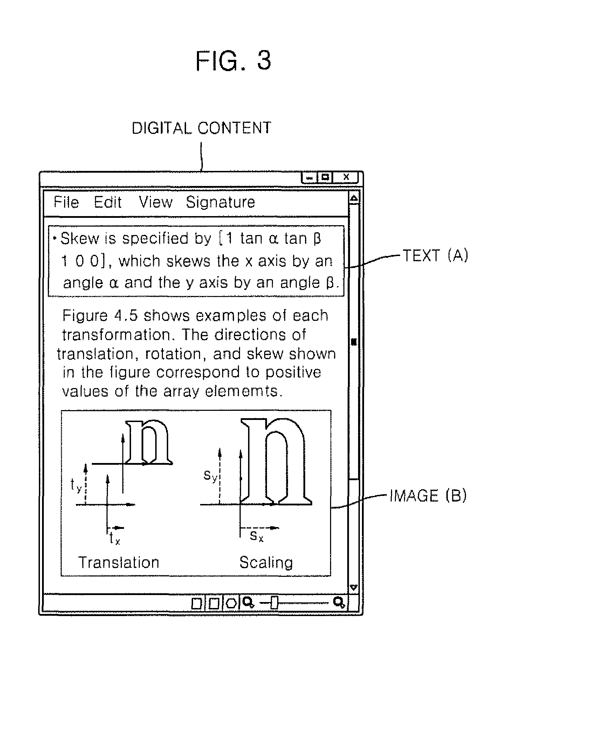

FIG. 3 is a view showing an embodiment of digital content and an object constituting the digital content.

Referring to FIG. 3, digital content means an entire PDF format document that is output through the user terminal 300. Furthermore, text (A) and image (B) included in the PDF document mean respective objects constituting the digital content.

A data region corresponding to each of a plurality of objects in the source code of the digital content means a binary data region for outputting an object in the user terminal 300. The data region for each object may also include a binary data region corresponding to a form in which the digital content is output through the user terminal 300, for example, corresponding to a layout, in addition to the binary data region corresponding to the digital content. Such a binary data region is interpreted using software or hardware installed in the user terminal 300 and is output through an output device of the user terminal 300 in a form that is perceptible by the user.

Referring back to FIG. 2, the data encryption unit 120 encrypts a data region corresponding to a protection target object among the plurality of data regions. The data encryption unit 120 may allow the data region corresponding to the protection target object to be extracted by the apparatus 200 for providing content based on rights for each object according to the present invention, and allow a data region corresponding to an object other than the protection target object to be extracted by a program (hereinafter referred to as a dedicated program) corresponding to the format of the digital content. In this case, the DRM program and the dedicated program are programs that are executed when the digital content is output through the user terminal 300.

In particular, a user's rights are needed for the user to access the digital content to read, edit, print, and modify the digital content and may be predetermined corresponding to respective objects constituting the digital content. In this case, the authorization is not performed for all objects constituting the digital content, but performed only for the protection target object, that is, an object that needs to be protected among a plurality of objects.

In addition, depending on users who access the digital content, different rights may be set even for the same protection target object. That is, the user's rights to use the digital content may be set differently depending on the user and the protection target object.

Referring to an embodiment shown in FIG. 3, text (A) and image (B) may correspond to the protection target object. In addition, the authorization may be performed such that user a may read text (A) and read and edit image (B), and user b may read only text A, but not image (B).

In the source code of the digital content as shown in FIG. 3, first, the data detection unit 110 detects data regions corresponding to the respective plurality of objects including text (A) and image (B).

The data encryption unit 120 encrypts the data regions corresponding to text (A) and image (B) such that the data regions corresponding to text (A) and image (B), each of which is the protection target object, are extracted by a DRM program in the user terminal 300 and data regions corresponding to other objects may be extracted by an Acrobat program that is a dedicated program corresponding to the PDF format. Referring back to FIG. 2, when the DRM program is not executed in the user terminal 300 or the user has no right to use the protection target object, the data encryption unit 120 may insert a data region corresponding to access disallowance information into the source code of the digital content such that the access disallowance information may be output through the user terminal 300, instead of the protection target object. In this case, the data region corresponding to the access disallowance information still has a standardized form for the data region. Further, the access disallowance information may be set to include, for example, a sentence of "you are not authorized," information that is changed from original substance in which the protection target object is output through the user terminal 300, and a link for downloading the DRM program.

In order to execute the DRM program to receive the encrypted part of the digital content, the user is required to have identification information, such as an ID and password, for logging in to the DRM program. That is, cases in which the DRM program is not executed in the user terminal 300 include a case in which the user terminal 300 does not have the DRM program installed therein or has no identification information or a case in which a user does not have a right to use the protection target object even when the user has the identification information.

While inserting the data region corresponding to the access disallowance information into the source code of the digital content, the data encryption unit 120 preferably maintains a standardized format for the data region. Specifically, the data encryption unit 120 observes a conventional standardized specification (format) of binary data such that software or hardware installed in the user terminal 300 that interprets the binary data may keep being used, and converts the source code using a specification that can be customized. In addition, a region that is not interpreted or a region that is considered to be garbage in the source code may be used to maintain compatibility.

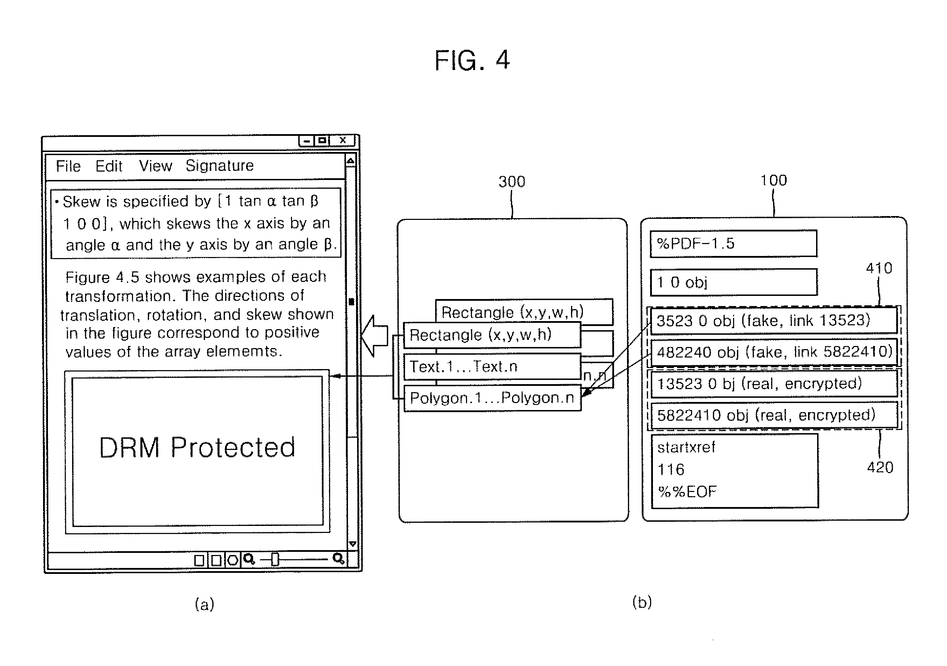

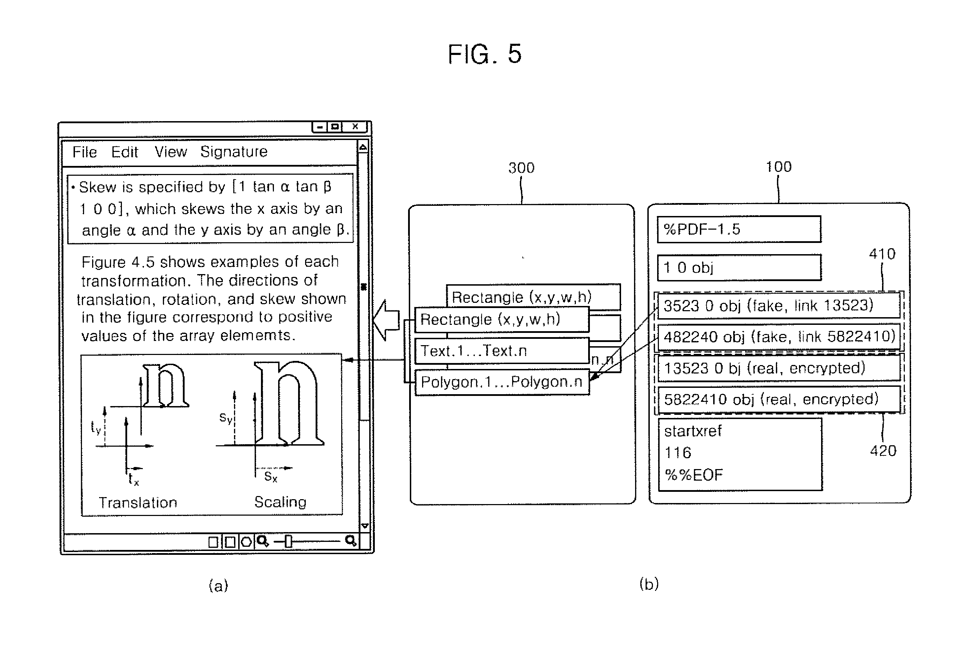

FIG. 4 is a view showing an embodiment in which access disallowance information is output by the user terminal 300, and FIG. 5 is a view showing an embodiment in which a protection target object is output by the user terminal 300.

Referring to FIG. 4, (a) of FIG. 4 shows a case in which the access disallowance information is output by the user terminal 300, and (b) of FIG. 4 shows a process of processing a data region for each object when the apparatus 200 for providing content based on rights for each object according to the present invention, that is, a DRM program is not installed in the user terminal 300.

The apparatus 100 for setting rights for each object of content according to the present invention inserts a data region corresponding to the access disallowance information, that is, fake information 410 into the source code such that the access disallowance information may be output instead of the protection target object. In this case, since the DRM program is not installed in the user terminal 300, the dedicated program may not decrypt linked encrypted data region 520. Consequently, the access disallowance information is output to the user terminal 300.

Referring to FIG. 5, (a) of FIG. 5 shows a case in which the protection target object is output by the user terminal 300, and (b) of FIG. 5 shows a process of processing a data region for each object when the apparatus 200 for providing content based on rights for each object according to the present invention, that is, the DRM program is installed in the user terminal 300.

Likewise, the apparatus 100 for setting rights for each object of content according to the present invention inserts a data region corresponding to the access disallowance information, that is, the fake information 410 into the source code such that the access disallowance information may be output instead of the protection target object. In this case, since the DRM program is installed in the user terminal 300, the user terminal 300 may decrypt encrypted data region 420. Specifically, the DRM program calls the encrypted protection target object through information that is linked with the fake information 410, decrypts the encrypted protection target object, and outputs the decrypted protection target object to the user terminal 300.

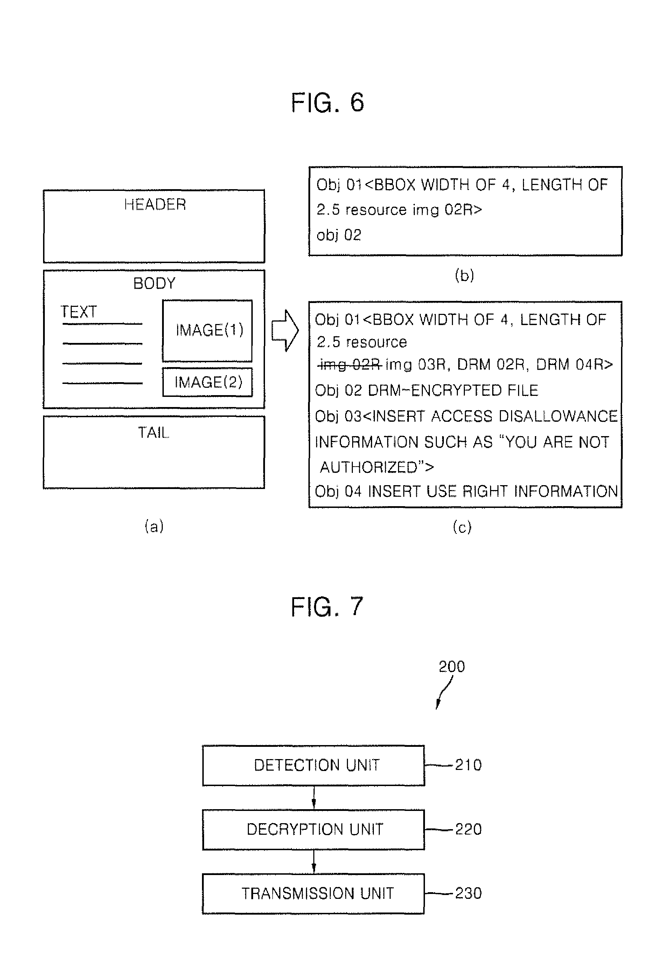

FIG. 6 is a view showing an embodiment in which a configuration of digital content is changed by the data encryption unit 120.

Referring to FIG. 6, (a) of FIG. 6 shows a configuration of digital content of PDF format, (b) shows an existing data region for each object, and (c) shows a data region for each object that is encrypted by the data encryption unit 120.

Referring to (a) of FIG. 6, the source code of the digital content of PDF format includes a header, a body, and a tail. The body includes objects of a text, image (1), and image (2), object-based use right information, information for calling another object, and user identification information.

In (b) of FIG. 6, an existing data region for image (1) is illustrated. When Obj 01<BBOX width of 4, length of 2.5, resource img 02R> is interpreted, "Obj 01" creates a box with a width of 4 and a length of 2.5 and "resource" indicates a format of image (1). Then, 02R (Reference) indicating Obj 2 is called. Obj 2 includes information (an image file) on the image (1) to be inserted.

In (c) of FIG. 6, a data region for image (1) that is encrypted by the data encryption unit 120 is illustrated. The data encryption unit 120 encrypts the existing data region for image (1) by converting the data region into Obj 01<BBOX width of 4, length of 2.5, resource img 03R, DRM 02R, DRM 04R>.

Specifically, unlike conventional methods, the data encryption unit 120 changes 02R indicating information for calling Obj 02 to 03R and add DRM 02R and DRM 04R therein to perform encryption. DRM 02R is information for calling Obj 2 and Obj 2 includes information (an image file) on image (1) to be inserted. The access disallowance information such as a sentence of "you are not authorized," is inserted into Obj 03, and use right information that is data for decrypting Obj 02 is inserted into Obj 04.

As described above, when the DRM program is not executed in the user terminal or the user has no rights to use the protection target object, the data encryption unit 120 may insert a data region corresponding to access disallowance information into the source code such that the access disallowance information may be output through the user terminal 300, instead of the protection target object.

Specifically, when a dedicated program corresponding to PDF format is executed, Obj 01 corresponding to image (1) calls Obj 03. Since the access disallowance information such as "you are not authorized" is included in Obj 03, the access disallowance information such as "you are not authorized" is output instead of image (1) that should have been displayed.

In this case, a sentence of "you are not authorized," an indication of "X," a link for downloading the DRM program, or another image unrelated to image (1) may be set as the output access disallowance information. However, since image (2) and a text other than image (1) are unencrypted information, image (2) and the text may be displayed on the user terminal 300 through the PDF-dedicated program.

In order to allow the encrypted image (1) to be displayed on the user terminal 300, a user should install the DRM program in the user terminal 300 and have a right to display image (1). Specifically, the user executes and logs in to the DRM program. If the user has the right to display image (1), the DRM program calls Obj 02. Since Obj 02 is encrypted, Obj 02 is decrypted by the DRM program. The DRM program decrypts Obj 02 using use right information included in Obj 04 and provides Obj 02 to the PDF dedicated program.

Since the data encryption unit 120 maintains a standard format of a data region and changes the data region, the data region may be interpreted by both the DRM program and the dedicated program. Specifically, the DRM program calls Obj 02 and Obj 04 including DRM before Obj 03 in Obj 01<BBOX width of 4, length of 2.5, resource img 03R, DRM 02R, DRM 04R>. Since the dedicated program calls Obj 03 first and ignores Obj 02 and Obj 04 which are not interpreted by the dedicated progrm, the dedicated program has no difficulty in executing the digital content. In addition, the data encryption unit 120 may encrypt the text and image (2) in the same way as described above.

As another embodiment, even when the digital content has a web-based format rather than a document, if the DRM program is not installed in the user terminal 300, the access disallowance information is output instead of the protection target object. In general, the web-based content includes HTML and JAVA scripts, and when information to be displayed on a web is a video, only a video tag is included, and the data is separately received through a URL link, etc.

Specifically, when the DRM program is not installed in the user terminal 300 with respect to web-based digital content including the video, the data encryption unit 120 inserts a fake URL at a position where URL information of the video was provided while maintaining HTML format in order not to replay the video. And also, the data encryption unit 120 inserts DRM information (a true URL of the video) into the bottom, allowing the DRM program to process the DRM information and allowing a URL for installing the fake URL or DRM program to be opened when the DRM program is not installed.

Referring back to FIG. 2, the data transmission unit 130 transmits the source code of the digital content including the encrypted data region to the user terminal 300.

In addition, the data transmission unit 130 may transmit, to the user terminal 300, encryption information including at least one of user identification information and use right information of the user corresponding to the protection target object in addition to the source code of the digital content.

Furthermore, the encryption information may include identification information of a plurality of users, and include use right information that is set separately corresponding to identification information. In this case, the DRM program installed in the user terminal 300 may compare the identification information received from the user with identification information included in the encryption information and decrypt the encrypted protection target object of the digital content according to the corresponding use right.

FIG. 7 is a block diagram showing a configuration of a preferred embodiment of the apparatus 200 for providing content based on rights for each object according to the present invention.

As described above, the apparatus 200 for providing content based on rights for each object according to the present invention may be implemented in the form of a DRM program installed in the user terminal 300.

Referring to FIG. 7, the apparatus 200 for providing content based on rights for each object according to the present invention includes a detection unit 210, a decryption unit 220, and a transmission unit 230.

The detection unit 210 detects the encrypted data region corresponding to the protection target object among the plurality of objects constituting digital content from the source code of the digital content that is output through the user terminal 300.

Specifically, the detection unit 210 may detect the data region encrypted by the data encryption unit 120 of the apparatus 100 for setting rights for each object of the content according to the present invention. In addition, the detection unit 210 may receive the source code of the digital content including the encrypted data region from the data transmission unit 130 or the user terminal 300.

And then, the decryption unit 220 decrypts the encrypted data region according to predetermined use right information corresponding to user identification information received from a user.

Subsequently, the transmission unit 230 transmits the decrypted data region to a dedicated program corresponding to the format of the digital content. The dedicated program may be installed in the user terminal 300. In addition, the transmission unit 230 may transmit the decrypted data region and the use right information of the user corresponding to the decrypted data region, allowing the dedicated program to execute the digital content with reference to the use right information.

When payment information corresponding to the protection target object is received from the user, the decryption unit 220 may decrypt the encrypted data region corresponding to the payment information. In this case, when there are a plurality of protection target objects and the user pays only for some of the plurality of protection target objects, the decryption unit 220 may decrypt the encrypted data region as many as the number corresponding to price information included in the payment information.

For example, in the related art, in order to download a specific thesis that is provided for a cost from a site for theses, the user should pay suitable fee for the thesis to receive the thesis. If the payment is not made, the user cannot download the entire thesis.

However, when the apparatus 200 for providing content based on rights for each object according to the present invention, that is, the DRM program is used, the user downloads the thesis irrespectively of whether the payment has been made, and then when executing the thesis, cannot open protection target objects. In order to receive the protection target object, the user may install the DRM program and enter the payment information to provide the thesis.

In addition, the number of protection target objects that are output in the thesis may be different according to the payment amount. For example, one of five protection target objects may be output when a user pays 1,000 won, and all the five protection target objects may be output when the user pays 5,000 won.

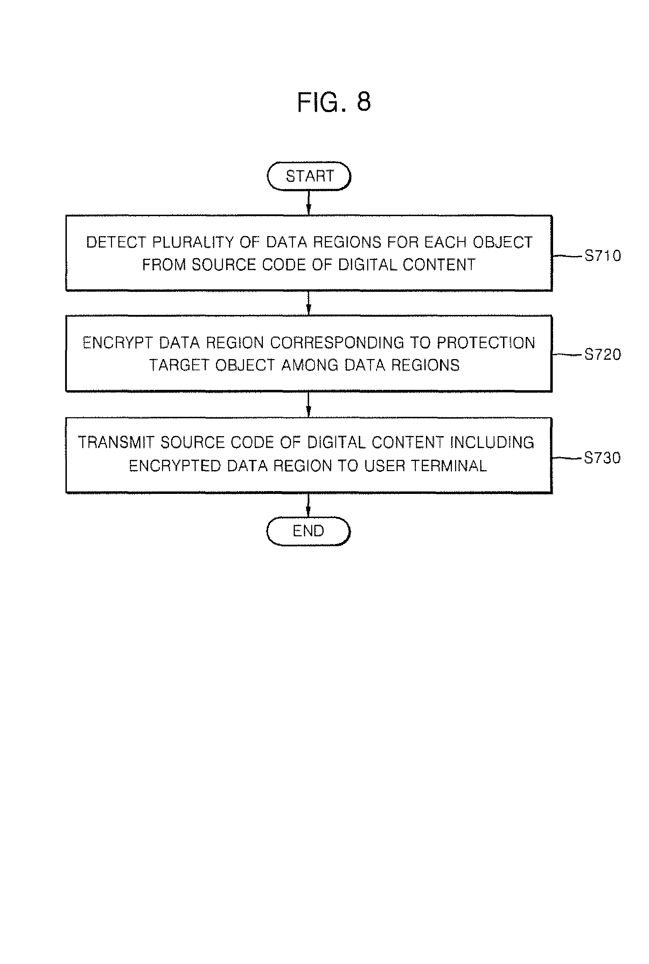

FIG. 8 is a flowchart showing a process of performing a preferred embodiment for a method of setting rights for each object of content according to the present invention.

Referring to FIG. 8, the data detection unit 110 detects, for each of a plurality of objects, a data region corresponding to each of the plurality of objects in the source code of the digital content including the plurality of objects in operation S710.

The data encryption unit 120 encrypts a data region corresponding to a protection target object among the plurality of data regions. Specifically, the data encryption unit 120 may allow the data region corresponding to the protection target object to be extracted by a DRM program, and allow a data region corresponding to an object other than the protection target object to be extracted by a program corresponding to the format of the digital content in operation S720.

When the DRM program is not executed in the user terminal 300 or the user has no rights to use the protection target object, the data encryption unit 120 may insert a data region corresponding to access disallowance information into the source code such that the access disallowance information may be output through the user terminal, instead of the protection target object.

The data transmission unit 130 transmits the source code of the digital content including the encrypted data region to the user terminal 300 in operation S730.

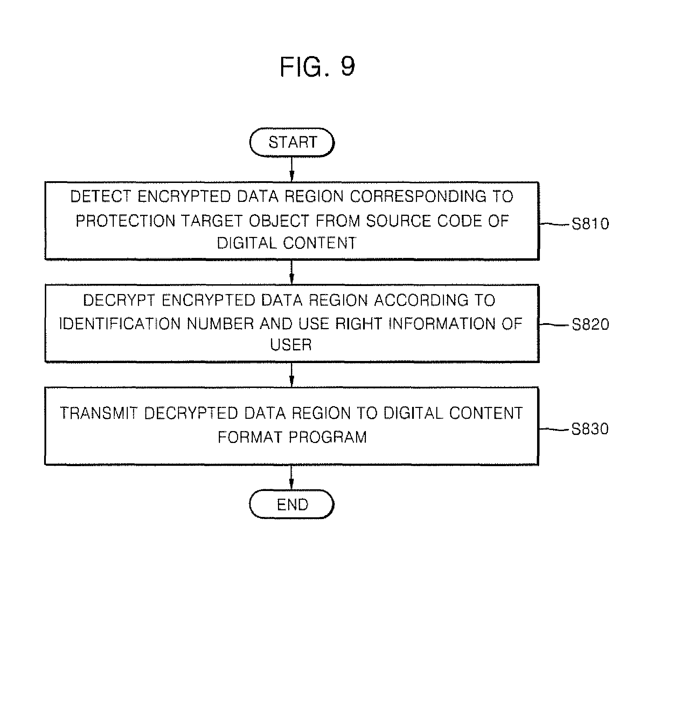

FIG. 9 is a flowchart showing a process of performing a preferred embodiment for a method of providing content based on rights for each object according to the present invention.

Referring to FIG. 9, the detection unit 210 detects the encrypted data region corresponding to the protection target object among the plurality of objects constituting digital content from the source code of the digital content that is output through the user terminal 300 in operation S810.

The detection unit 210 may detect the data region encrypted by the data encryption unit 120 of the apparatus 100 for setting rights for each object of content according to the present invention. In addition, the detection unit 210 may receive the source code of the digital content including the encrypted data region from the data transmission unit 130 or the user terminal 300.

And then, the decryption unit 220 decrypts the encrypted data region according to predetermined use right information corresponding to user identification information received from a user in operation S820.

Subsequently, the transmission unit 230 transmits the decrypted data region to a dedicated program corresponding to the format of the digital content in operation S830. The dedicated program corresponding to the format of the digital content may be installed in the user terminal 300.

In addition, the transmission unit 230 may transmit the decrypted data region and the use right information of the user corresponding to the decrypted data region.

The invention can also be embodied as computer-readable codes on a computer-readable recording medium. The computer-readable recording medium is any data storage medium that can store data which can be thereafter read by a computer system, Examples of the computer-readable recording medium include read-only memory (ROM), random-access memory (RAM), CD-ROMs, magnetic tapes, floppy disks, and optical data storage devices. The computer-readable recording medium can be implemented in the form of carrier waves (for example, transmission over the Internet). The computer-readable recording medium can also be distributed over network-coupled computer systems so that the computer-readable code is stored and executed in a distributed fashion.

While the present invention has been particularly shown and described with reference to preferred embodiments thereof, it should not be construed as being limited to the embodiments set forth herein. It will be understood by those skilled in the art that various changes in form and details may be made to the described embodiments without departing from the spirit and scope of the present invention as defined by the following claims.

## Claims

1. An apparatus for setting rights for each object of content, the apparatus comprising:
a date detection unit configured to detect, for each of a plurality of objects, data regions corresponding to each of the plurality of objects from a source code of digital content including the plurality of objects;
a data encryption unit configured to encrypt a data region corresponding to a protection target object among the data regions; and
a data transmission unit configured to transmit the source code of the digital content including the encrypted data region to a user terminal.

2. The apparatus of claim 1, wherein the data encryption unit allows the data region corresponding to the protection target object to be extracted by a DRM program, and allows a data region corresponding to an object other than the protection target object to be extracted by a program corresponding to a format of the digital content.

3. The apparatus of claim 1, wherein the data encryption unit inserts a data region corresponding to access disallowance information into the source code such that the access disallowance information is output through the user terminal instead of the protection target object when the DRM program is not executed in the user terminal or a user thereof has no right to use the protection target object.

4. The apparatus of claim 3, wherein the data encryption unit maintains a standardized format for the data region while inserting the data region corresponding to the access disallowance information.

5. The apparatus of claim 1, wherein the data transmission unit transmits, to the user terminal, encryption information including at least one of identification information of a user and use right information of the user corresponding to the protection target object in addition to the source code of the digital content.

6. The apparatus of claim 1, wherein each of the objects included in the digital content is at least one of a video, an image, a sound source, and a text.

7. An apparatus for providing content based on rights for each object, the apparatus comprising:
a detection unit configured to detect an encrypted data region corresponding to a protection target object among a plurality of objects constituting digital content output through a user terminal from a source code of the digital content;
a decryption unit configured to decrypt the encrypted data region according to predetermined use right information of a user corresponding to identification information of the user received from the user; and
a transmission unit configured to transmit the decrypted data region to a program corresponding to a format of the digital content.

8. The apparatus of claim 7, wherein the transmission unit further transmits the use right information of the user corresponding to the decrypted data region to the program corresponding to the format of the digital content.

9. The apparatus of claim 7, wherein, when payment information corresponding to the protection target object is received from the user, the decryption unit decrypts the encrypted data region corresponding to the payment information.

10. A method of setting rights for each object of content, the method comprising:
a data detection step of detecting, for each of a plurality of objects, data regions corresponding to each of the plurality of objects from a source code of digital content including the plurality of objects;
a data encryption step of encrypting a data region corresponding to a protection target object among the data regions; and
a data transmission step of transmitting the source code of the digital content including the encrypted data region to a user terminal.

11. The method of claim 10, wherein the data encryption step allows the data region corresponding to the protection target object to be extracted by a DRM program, and allows a data region corresponding to an object other than the protection target object to be extracted by a program corresponding to a format of the digital content.

12. The method of claim 10, wherein the data encryption step inserts a data region corresponding to access disallowance information into the source code such that the access disallowance information is output through the user terminal instead of the protection target object when the DRM program is not executed in the user terminal or a user thereof has no right to use the protection target object.

13. The method of claim 12, wherein the data encryption step maintains a standardized format for the data region while inserting the data region corresponding to the access disallowance information.

14. The method of claim 10, wherein the data transmission step transmits, to the user terminal, encryption information including at least one of identification information of a user and use right information of the user corresponding to the protection target object in addition to the source code of the digital content.

15. The method of claim 10, wherein each of the objects included in the digital content is at least one of a video, an image, a sound source, and a text.

16. A method of providing content based on rights for each object, the method comprising:
a detection step of detecting an encrypted data region corresponding to a protection target object among a plurality of objects constituting digital content output through a user terminal from a source code of the digital content;
a decryption step of decrypting the encrypted data region according to predetermined use right information of a user corresponding to identification information of the user received from the user; and
a transmission step of transmitting the decrypted data region to a program corresponding to a format of the digital content.

17. The method of claim 16, wherein the transmission step further transmits the use right information of the user corresponding to the decrypted data region to the program corresponding to the format of the digital content.

18. The method of claim 16, wherein, when payment information corresponding to the protection target object is received from the user, the decryption step decrypts the encrypted data region corresponding to the payment information.
